# EUROPÄISCHE PATENTSCHRIFT

(11) **EP 1 569 430 B1**
(45) Veröffentlichungstag und Bekanntmachung des Hinweises auf die Patenterteilung: **26.12.2012**
(21) Anmeldenummer: 04002077.8
(22) Anmeldetag: 30.01.2004
(51) Int. Cl.: H04M 3/493

(54) **Verfahren zur Ermittlung eines Namens eines Teilnehmers in einem Kommunikationsnetz**
Method for providing the name of a subscriber in a telecommunication network
Méthode fournissant le nom de l'abonné dans un réseau de télécommunication

(43) Veröffentlichungstag der Anmeldung: 31.08.2005
(73) Patentinhaber: Nokia Siemens Networks GmbH & Co. KG, 81541 München (DE)
(72) Erfinder: Krembs, Bernhard, 82049 Pullach (DE)

(56) Entgegenhaltungen:
- EP-A- 1 143 667
- WO-A2-03/094473
- US-A- 5 832 433
- US-A1- 2002 152 265
- BASSON ET AL: "Assessing the Acceptability of Automated Customer Name and Address: A Rigorous Comparison of Text-to-Speech Synthetizers", AVIOS PROCEEDINGS,, 1 January 1991 (1991-01-01), pages 201-204, XP008143906,

## Beschreibung

Die Erfindung betrifft ein Verfahren zur Übermittlung eines Namens eines ersten Teilnehmers an einen zweiten Teilnehmer in einem Telekommunikationsnetz, bei dem eine Rufnummer des ersten Teilnehmers und ein Dienstnutzungscode vom zweiten Teilnehmer an einem ihm zugeordneten Telekommunikationsendgerät eingegeben wird.

Weiterhin betrifft die Erfindung eine Vorrichtung zur Durchführung des erfindungsgemäßen Verfahrens, umfassend
- Mittel zum Schalten von Sprachkanälen und
- Empfangsmittel zum Empfang einer einem ersten Teilnehmer zugeordneten Rufnummer und eines Dienstnutzungscodes.

In der Veröffentlichung EP-A-1 143 667 (NOKIA CORP), 10 Oktober 2001 (2001-10-10), werden ein Verfahren und ein System beschrieben, einem drahtlosen Endgerät Online-Zugriff auf ein Systemtelefonbuch bereitzustellen, wobei das System, wie zum Beispiel ein WLAN, instruiert wird, eine Telefonbuchapplikation zu starten, so dass für eingehende Rufe eine Telephonbuchapplikation startet als Folge einer Identifikation einer Telefonnummer am Endgerät des Nutzers und für abgehende Rufe die Telephonbuchapplikation durch eine Nutzerschnittstelle des Endgeräts des Nutzers startet, und wobei eine Suchanfrage an die Telefonbuchdatenbasis ausgeführt wird zur Identifikation eines mit einer Telefonnummer korrespondierenden Anrufers eines eingehenden Rufs oder zur Identifikation wenigstens einer Telefonnummer, einer Person oder Partei des zu initiierenden Rufs. Ebenfalls wird eine Journalansichtsapplikation beschrieben, welche in Verbindung mit der Telephonbuchapplikation verwendet werden kann. Im Hinblick auf die Journalansichtsapplikation wird das System, wie zum

Beispiel ein WLAN, instruiert, eine Journalansichtsapplikation zu starten, um Hintergrundinformation für einen eingehenden Ruf oder für einen gerade initiierten Ruf zu erhalten, wobei eine Suchanfrage an eine Journaldatenbasis ausgeführt wird, um die Hintergrundinformation aufzufinden. Hierbei umfasst die Suchabfrage einen Prozess, in welchem entweder eine Rufnummer eines eingehenden Rufs oder für einen abgehenden durchzuführenden Ruf zumindest eine Rufnummer oder ein Name einer Person oder Partei abgeglichen wird mit der Hintergrundinformation in der Datenbasis, und wobei die abgeglichene Hintergrundinformation auf dem drahtlosen Endgerät ausgegeben wird.

In der Veröffentlichung US 2002/152265 A1 (FELMAN HILLEL), 17. Oktober 2002 (2002-10-17), werden ein Verfahren und eine Vorrichtung beschrieben zum Screening des Zugriffs auf persönliche Kontaktinformation in einer elektronischen oder telefonischen Datenbasis, wobei eine anfragende Partei ein Anfragesignal zur Erlangung persönlicher Kontaktinformation generiert, welches von einem Brücken-Website Server empfangen wird, wobei der Brücken-Website Server ein Anfragenotifizierungssignal an eine listende Partei sendet, um ihn oder sie über die Existenz einer Anfrage nach persönlicher Kontaktinformation und die Identität der anfragenden Partei zu informieren, wobei die listende Partei ein Zustimmungs-/Nichtzustimmungssignal an den Brücken-Website Server sendet, welches anzeigt, welche persönliche Kontaktinformation der anfragenden Partei offenbart werden sollte, und wobei ein persönliches Kontaktinformationssignal der anfragenden Partei die persönliche Kontaktinformation der listenden Partei überbringt, für welche die listende Partei wünschte, dass sie verfügbar gemacht wird.

In der Veröffentlichung WO03/094473 A2 (WEB.DE), 13. November 2003 (2003-11-13), schließt eine Website zur Bereitstellung von Kommunikationen ein Ereignisidentifikationselement und ein Verarbeitungsgerät ein. Das Ereignisidentifikationselement ist konfiguriert, ein Ereignis zu identifizieren, und das Verarbeitungsgerät ist konfiguriert, als Funktion des Ereignisses private Kommunikationen bereitzustellen zwischen einer Endnutzereinheit und einer spezifischen Einheit, welche assoziiert ist mit einer Webseite der Website.

Aus der Veröffentlichung US 5832433 A (YASHCHIN DINA [US] ET AL), 3. November 1998, sind Verfahren und Systeme bekannt zur Bereitstellung automatisierter Operatordienste und insbesondere ein invertierter Adressbuchassistenzdienst. Hierbei wird einem Anrufer die zu einer Telefonnummer gehörige Information einer ein invertiertes Adressbuch enthaltenden Datenbasis als Sprache von einem eine Text-to-Speech-Synthese bereitstellenden Gerät ausgegeben.

Aus der Veröffentlichung BASSON ET AL: "Assessing the Acceptability of Automated Customer Name and Address: A Rigorous Comparison of Text-to-Speech Synthesizers" AVIOS PROCEEDINGS, 1. Januar 1991 (1991-01-01), Seiten 201-204, XP008143906, ist ein automatisierter Dienst für Kundennamen und -adresse bekannt, welcher Sprachsynthese verwendet.

Moderne Telekommunikationsnetze bieten eine Fülle von Diensten, welche die Identifizierung eines Teilnehmer in einem Telekommunikationsnetz ermöglichen. So wird einem gerufenen Teilnehmer mit Hilfe des Dienstes "Calling Line Identification Presentation", kurz CLIP, die Rufnummer des rufenden Teilnehmers oder mit Hilfe des Dienstes "Calling Name Identification Presentation", kurz CNIP, der Name des rufenden Teilnehmers angezeigt.

Desgleichen ist die Anzeige der Rufnummer oder des Namens des gerufenen Teilnehmers bei rufenden Teilnehmer durch die Dienste "Connected Line Identification Presentation", kurz COLP, sowie "Connected Name Identification Presentation", kurz CONP möglich.

Jedoch ist der Aufbau einer Verbindung zu einem Teilnehmer zwecks der Namensauskunft nicht immer erwünscht, etwa wenn in einer Rückrufliste eines Telefons eine Nummer eines unbekannten Teilnehmers gespeichert ist. In diesem Fall liegt der Wunsch nahe, erst die Identität dieses Teilnehmers festzustellen, bevor mit diesem ein Gespräch aufgenommen wird.

Nach dem Stand der Technik existieren hierzu auch Datenbanken, welche entweder zentral auf einem Server oder auch lokal auf einem PC installiert werden können. Diese Datenbanken werden handelsüblich auf einer CD angeboten und sind so für jedermann zugänglich.

Oft ist der Zugang zu einem PC oder einem Server, auf dem die genannte Software installiert ist, nicht möglich, beispielsweise unterwegs. Da ein Mobiltelefon jedoch in der Regel überall mitgeführt wird, stellt sich das erwähnte Problem auch in diesem Fall.

Aufgabe der Erfindung ist es daher, ein Verfahren zur Ermittlung eines Namens eines Teilnehmers anzugeben, welches lediglich die Nutzung eines Telefons erfordert.

Dies geschieht erfindungsgemäß mit einem Verfahren nach Anspruch 1.

Durch diese Verfahrensschritte werden die Nachteile der im Stand der Technik bekannten Verfahren vorteilhaft überwunden. Für die Namensauskunft ist ein Verbindungsaufbau also nicht mehr erforderlich. Denkbar ist natürlich auch, dass zusätzlich zum Namen weitere Informationen, wie beispielsweise die Wohn- oder Emailadresse, ermittelt und an den zweiten Teilnehmer übertragen werden.

Besonders vorteilhaft ist es dabei, wenn zumindest ein Teil der Rufnummer für die Bestimmung, von welcher Einrichtung im Telekommunikationsnetz die Namensermittlung durchgeführt werden soll, herangezogen wird.

Bei dieser Variante wird ein Teil der Rufnummer, etwa eine Länder- oder Ortsvorwahl dazu verwendet, um eine Einrichtung für die Namensermittlung zu ermitteln. So ist es zum Beispiel sinnvoll, bei der amerikanischen Vorwahl 001 auch einen Server in diesem Staatsgebiet zu kontaktieren, da dort die gewünschte Information eher vorhanden sein dürfte als etwa in Deutschland. Ein ähnliches Problem stellt sich zum Beispiel auch bei einer Nebenstelle in einer Firma. Hier wird der Auskunftswunsch zuerst an die Nebenstellenanlage der genannten Firma geleitet und dort zu der gewünschten Nebenstellennummer der Name ermittelt. Die angeforderte Information wird in der Regel nur dort und nicht im öffentlichen Netz verfügbar sein.

Vorteilhaft ist es weiterhin, wenn für die Namensermittlung nur ein Teil der Rufnummer ausgewertet wird. In den zuvor genannten Beispielen wird für die Zwecke der Namensermittlung nicht die gesamte Rufnummer nötig sein. Um die erforderlichen Datenbanken nicht mit unnötigen Daten zu belasten wird nur der unbedingt erforderliche Teil einer Rufnummer, also etwa die Nummer der Nebenstelle gespeichert, und im Falle einer Namensermittlung der übrige Teil der empfangenen Rufnummer verworfen.

Eine günstige Variante der Erfindung ist auch mit einem Verfahren gegeben, bei dem für die Nutzung des Dienstes ein Zugangscode eingegeben werden muss, welcher im Telekommunikationsnetz ausgewertet wird. Insbesondere im Fall einer Nebenstellenanlage wird der Zugang für jeden beliebigen Teilnehmer in einem Telekommunikationsnetz in der Regel nicht erwünscht sein. Der Zugang kann dann mit einem Zugangscode, etwa in Form einer "Personal Identification Number", kurz PIN, geschützt werden.

Günstig ist es ferner, wenn die Eingabe der Rufnummer und des Dienstnutzungscodes mit Hilfe des Dienstes "Subscriber Controlled Input", kurz SCI, erfolgt. Dies ist ein bereits vorhandener Dienst eines Telekommunikationsnetzes, welcher hier vorteilhaft eingesetzt wird, um eine Realisierung des erfindungsgemäßen Verfahrens zu erleichtern.

Vorteilhaft ist es darüber hinaus, wenn die Rufnummer und der Dienstnutzungscode im Telekommunikationsnetz mit Hilfe des Dienstes "Remote Subscriber Controlled Input", kurz RSCI, übermittelt wird. Dies ist ebenfalls vorhandener Dienst, welcher die Realisierung des erfindungsgemäßen Verfahrens ebenfalls erleichtert.

Schließlich ist es auch vorteilhaft, wenn der Name im Telekommunikationsnetz mit Hilfe des Dienstes "Transaction Capability Application Part", kurz TCAP, übermittelt wird. Der Dienst "Transaction Capability Application Part" TCAP erlaubt den Informationstransfer dabei ohne Verwendung eines Sprachkanals. Die Ressourcen des Telekommunikationsnetzes werden daher nur wenig belastet.

Eine günstige Variante der Erfindung ist letztlich auch mit einem Verfahren gegeben,
- bei dem der Name des ersten Teilnehmers als Zeichenkette an das Telekommunikationsendgerät des zweiten Teilnehmers übermittelt wird und die Ausgabe des Namens optisch erfolgt oder
- bei dem der Name des ersten Teilnehmers in gesprochener Form an das Telekommunikationsendgerät des zweiten Teilnehmers übermittelt wird und die Ausgabe des Namens akustisch erfolgt.

Bei einer ersten Variante wird der Name des ersten Teilnehmers als Zeichenkette zum zweiten Teilnehmer übermittelt, was in Form von in Telekommunikationsnetzen bekannten Diensten, wie etwa die Informationselemente "Display" oder "Info" sowie mit Hilfe des "Short Message Service", kurz SMS, erfolgen kann. Um den Dienst auch Teilnehmern zugänglich zu machen, die lediglich über ein Telefon ohne Anzeigeeinheit verfügen, ist jedoch auch die Sprachausgabe der gewünschten Information, etwa mit Hilfe eines Sprachautomaten, vorgesehen.

Die Aufgabe der Erfindung wird auch mit einer Vorrichtung nach Anspruch 8 gelöst.

Durch diese Vorrichtung werden die Nachteile der im Stand der Technik bekannten Vorrichtungen vorteilhaft überwunden. Für die Namensauskunft ist ein Verbindungsaufbau hier nicht mehr erforderlich. Beispiele für solche Vorrichtungen sind etwa Vermittlungsknoten, Server, Nebenstellenanlagen sowie Auskunftsstellen.

Vorteilhaft ist es dabei, wenn Suchmittel zur Ermittlung des Namens anhand lediglich eines Teils dieser Rufnummer vorhanden sind. Wie bereits erwähnt, kann auch nur der unbedingt erforderliche Teil einer Rufnummer, also etwa die Nummer eine Nebenstelle ausgewertet werden, um die erforderlichen Datenbanken nicht mit unnötigen Daten zu belasten.

Im übrigen gelten die beim erfindungsgemäßen Verfahren genannten Varianten und Vorteile gleichermaßen auch für die erfindungsgemäße Vorrichtung.

Die Erfindung wird anhand eines in den Figuren dargestellten Ausführungsbeispiels näher erläutert, welches die Ermittlung des Namens eines Teilnehmers anhand seiner Rufnummer betrifft.

Es zeigen:
- Figur 1:: die Namensauskunft in einem Telekommunikationsnetz NET;
- Figur 2:: Die Namensauskunft bei einer Nebenstelle NST über zwei Vermittlungsstellen VST1 und VST2 hinweg.

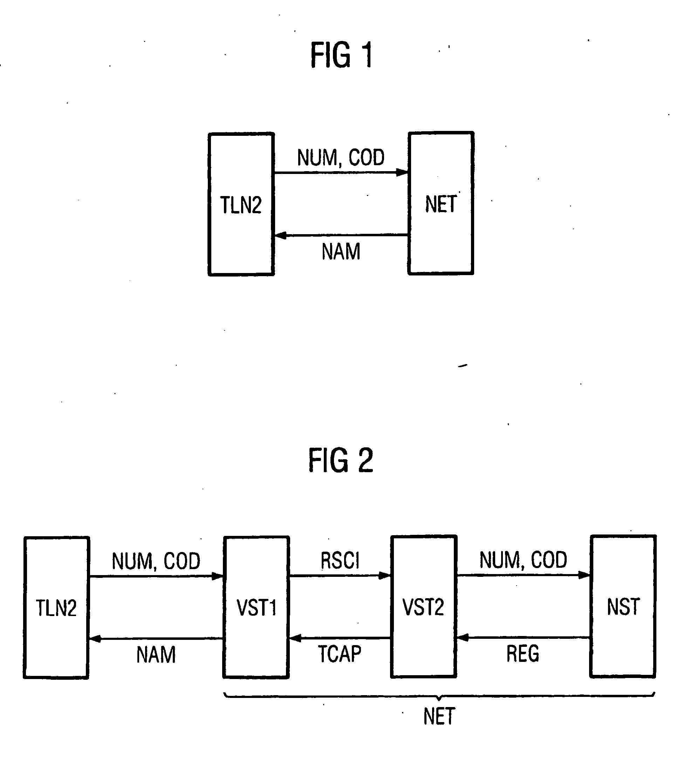

Figur 1 zeigt einen zweiten Teilnehmer TLN2 und ein Telekommunikationsnetz NET, an welches ein Telekommunikationsendgerät des zweiten Teilnehmers TLN2 angeschlossen ist. Mit Hilfe des Dienstes "Subscriber Controlled Input" SCI werden vom zweiten Teilnehmer TLN2 nun die Rufnummer NUM eines ersten Teilnehmers sowie ein Dienstzugangscode COD auf seinem Telekommunikationsendgerät eingegeben und in das Telekommunikationsnetz NET übermittelt. Dort erfolgt die Ermittlung des Namens NAM des ersten Teilnehmers, etwa direkt in einer Vermittlungsstelle oder einem dafür vorgesehen Server. Dies kann mit einer entsprechenden Tabelle erfolgen, in der die Rufnummern und Namen der Teilnehmer des Telekommunikationsnetzes NET eingetragen sind. Darüber hinaus können dort auch noch weitere Informationen, wie etwa Wohn- oder Emailadressen der Teilnehmer, verzeichnet sein. In einer Variante der Erfindung werden auch Dienste eines Intelligenten Netzes, welches die erforderlichen Suchalgorithmen bereitstellt, genutzt.

In Folge wird nun der Name NAM an den zweiten Teilnehmer TLN2 gesendet und dort auf einer Anzeige seines Telekommunikationsendgerätes ausgegeben. Denkbar sind etwa Texte wie "Der Name des gewünschten Teilnehmers lautet *Name*". Weiterhin können zusätzlich zum Namen NAM auch weitere in der genannten Tabelle verzeichneten Informationen, wie beispielsweise die Wohnadresse an den zweiten Teilnehmer TLN2 übermittelt und dort angezeigt werden. Möglich ist auch, dass das Ergebnis der Suche mit Hilfe des Short Message Service übermittelt wird. Um den Dienst auch Teilnehmern zugänglich zu machen, die lediglich über ein Telefon ohne Anzeigeeinheit verfügen, ist auch die Sprachausgabe der gewünschten Information vorstellbar.

Figur 2 zeigt eine spezielle Anordnung zur Namensermittlung und umfasst einen zweiten Teilnehmer TLN2, eine erste Vermittlungsstelle VST1, eine zweite Vermittlungsstelle VST2 sowie eine Nebenstellenanlage NST. Die erste Vermittlungsstelle VST1, die zweite Vermittlungsstelle VST2 und die Nebenstellenanlage NST bilden dabei das Telekommunikationsnetz NET.

Die Funktion der in Figur 2 dargestellten Anordnung ist nun wie folgt:

Vom zweiten Teilnehmer TLN2 werden wiederum die Rufnummer NUM eines ersten Teilnehmers sowie ein Dienstzugangscode COD eingegeben und in das Telekommunikationsnetz NET übermittelt. Zusätzlich ist, sofern die Dienstnutzung zusätzlich auch mit einem Zugangscode gesichert ist, dieser Zugangscode einzugeben.

Die erste Vermittlungsstelle VST1, an welche der zweite Teilnehmer TLN2 angeschlossen ist, empfängt diese Informationen und reicht sie mit Hilfe des Dienstes "Remote Subscriber Controlled Input" RSCI an die zweite Vermittlungsstelle VST2 weiter, welche von der ersten Vermittlungsstelle VST1 anhand der eingegeben Rufnummer NUM als Zwischenziel für die Namensermittlung bestimmt wurde.

Von der zweiten Vermittlungsstelle VST2 werden Rufnummer NUM und Dienstnutzungscode COD sowie gegebenenfalls ein Zugangscode zur Nebenstellenanlage NST, welche für die Bestimmung des Namens NAM des ersten Teilnehmers ausgewählt wurde, gesendet. Anhand des Dienstnutzungscodes COD wird dort erkannt, dass keine Sprachverbindung zum ersten Teilnehmer aufgebaut werden, sondern stattdessen lediglich sein Name NAM ermittelt werden soll. In Folge wird ein Teil der Rufnummer NUM, nämlich jener Teil, welcher die Nebenstelle des ersten Teilnehmers angibt, zur Bestimmung des Namens NAM herangezogen. Dies kann wieder beispielsweise mit Hilfe einer Tabelle erfolgen. Zuvor wird gegebenenfalls natürlich noch die Richtigkeit des übermittelten Zugangscodes geprüft, sodass nicht jeder beliebige Teilnehmer des Telekommunikationsnetzes NET, möglicherweise vertrauliche Informationen anfordern kann.

In Folge wird der Name NAM des ersten Teilnehmers mit Hilfe einer sogenannten "Register-Meldung" REG von der Nebenstellenanlage NST an die zweite Vermittlungsstelle VST2 übermittelt. Danach wird die gewünschte Information mit dem Dienst "Transaction Capability Application Part" TCAP an die erste Vermittlungsstelle VST1 gesendet. Der Dienst "Transaction Capability Application Part" TCAP erlaubt den Informationstransfer dabei ohne Verwendung eines Sprachkanals. Schließlich wird der Name NAM an den zweiten Teilnehmer TLN2 übermittelt und dort angezeigt.

Alternativ ist natürlich auch hier die Übermittlung weiterer, über den Namen NAM hinausgehender, Informationen, sowie die Ausgabe mit Hilfe eines Sprachautomaten denkbar. Anstelle der "Register-Meldung" sind weiterhin auch andere Meldungen denkbar, bei denen eine Nutzung eines Sprachkanals nicht erforderlich ist.

Üblicherweise ist die Nebenstellenanlage NST Teil eines privaten Netzes und die Vermittlungsstellen VST1 und VST2 bilden ein öffentliches Netz. Für die Belange der Erfindung ist diese Unterteilung jedoch weniger bedeutsam. Denkbar ist auch, dass die Nebenstellenanlage NST in die zweite Vermittlungsstelle VST2 integriert ist. Diese Anordnung ist unter dem Begriff "CENTREX" bekannt.

## Patentansprüche

1. Verfahren zur Übermittlung eines Namens (NAM) eines ersten Teilnehmers an einen zweiten Teilnehmer (TLN2) in einem Telekommunikationsnetz (NET), wobei eine Rufnummer (NUM) des ersten Teilnehmers und ein Dienstnutzungscode (COD) vom zweiten Teilnehmer (TLN2) an einem ihm zugeordneten Telekommunikationsendgerät eingegeben wird, wobei
- diese Rufnummer (NUM) in das Telekommunikationsnetz (NET) übermittelt und dort die Ermittlung des Namens (NAM) des ersten Teilnehmers, welcher dieser Rufnummer (NUM) zugeordnet ist, aufgrund des Dienstnutzungscodes (COD) gestartet wird, und
- der Name (NAM) an das Telekommunikationsendgerät des zweiten Teilnehmers (TLN2) übermittelt und dort ausgegeben wird, ohne dass ein Verbindungsaufbau zum ersten Teilnehmer erfolgt,
**dadurch gekennzeichnet,**
- **dass** der Name (NAM) des ersten Teilnehmers mit Hilfe einer Meldung von einer Nebenstellenanlage (NST) an eine zweite Vermittlungsstelle (VST2) übermittelt wird,
- **dass** der Name (NAM) im Telekommunikationsnetz (NET) mit Hilfe eines Dienstes Transaction Capability Application Part TCAP von der zweiten Vermittlungsstelle (VST2) an eine erste Vermittlungsstelle (VST1) übermittelt wird, und
- **dass** der Name (NAM) des ersten Teilnehmers als Zeichenkette von der ersten Vermittlungsstelle (VST1) an das Telekommunikationsendgerät des zweiten Teilnehmers (TLN2) übermittelt wird und die Ausgabe des Namens (NAM) optisch erfolgt.

2. Verfahren nach Anspruch 1, **dadurch gekennzeichnet, dass** zumindest ein Teil der Rufnummer
(NUM) für die Bestimmung, von welcher Einrichtung im Telekommunikationsnetz (NET) die Namensermittlung durchgeführt werden soll, herangezogen wird.

3. Verfahren nach Anspruch 1 oder 2, **dadurch gekennzeichnet, dass** für die Namensermittlung nur ein Teil der Rufnummer (NUM) ausgewertet wird.

4. Verfahren nach einem der Ansprüche 1 bis 3, **dadurch gekennzeichnet, dass** für die Nutzung des Dienstes ein Zugangscode eingegeben werden muss, welcher im Telekommunikationsnetz (NET) ausgewertet wird.

5. Verfahren nach einem der Ansprüche 1 bis 4, **dadurch gekennzeichnet, dass** die Eingabe der Rufnummer und des Dienstnutzungscodes mit Hilfe des Dienstes "Subscriber Controlled Input" SCI erfolgt.

6. Verfahren nach einem der Ansprüche 1 bis 5, **dadurch gekennzeichnet, dass** die Rufnummer und der Dienstnutzungscode im Telekommunikationsnetz mit Hilfe des Dienstes Remote Subscriber Controlled Input RSCI übermittelt wird.

7. Verfahren nach einem der Ansprüche 1 bis 6,
**dadurch gekennzeichnet,**
- **dass** der Name (NAM) des ersten Teilnehmers in gesprochener Form an das Telekommunikationsendgerät des zweiten Teilnehmers (TLN2) übermittelt wird und die Ausgabe des Namens akustisch erfolgt.

8. Vorrichtung, umfassend
- Mittel zum Schalten von Sprachkanälen und
- Empfangsmittel zum Empfang einer einem ersten Teilnehmer zugeordneten Rufnummer (NUM) und eines Dienstnutzungscodes (COD), wobei
- diese Startmittel zum Starten einer Ermittlung des Namens (NAM) des ersten Teilnehmers anhand des Dienstnutzungscodes (COD) und Suchmittel zur Ermittlung des Namens (NAM) anhand dieser Rufnummer (NUM) umfasst, und
- diese Sendemittel zum Senden des Namens (NAM) an ein Telekommunikationsendgerät eines zweiten Teilnehmers (TLN2) umfasst,
**dadurch gekennzeichnet,**
**dass** der Name (NAM) des ersten Teilnehmers mit Hilfe einer Meldung von einer Nebenstellenanlage (NST) an eine zweite Vermittlungsstelle (VST2) übermittelt wird,
**dass** der Name (NAM) in einem Telekommunikationsnetz (NET) mit Hilfe eines Dienstes Transaction Capability Application Part TCAP von der zweiten Vermittlungsstelle (VST2) an eine erste Vermittlungsstelle (VST1) übermittelt wird, und
**dass** der Name (NAM) des ersten Teilnehmers als Zeichenkette von der ersten Vermittlungsstelle (VST1) an das Telekommunikationsendgerät des zweiten Teilnehmers (TLN2) übermittelt wird und die Ausgabe des Namens (NAM) optisch erfolgt.

9. Vorrichtung nach Anspruch 8, **dadurch gekennzeichnet, dass** Suchmittel zur Ermittlung des Namens (NAM) anhand lediglich eines Teils dieser Rufnummer (NUM) vorhanden sind.

## Claims

1. Method for transmitting a name (NAM) of a first subscriber to a second subscriber (TLN2) in a telecommunication network (NET), wherein a telephone number (NUM) of the first subscriber and a service use code (COD) are input by the second subscriber (TLN2) on a telecommunication terminal associated with said second subscriber, wherein
- this telephone number (NUM) is transmitted to the telecommunication network (NET), and the latter starts the ascertainment of the name (NAM) of the first subscriber associated with this telephone number (NUM) on the basis of the service use code (COD), and
- the name (NAM) is transmitted to the telecommunication terminal of the second subscriber (TLN2) and is output thereon without a connection being set up to the first subscriber,
**characterized**
- **in that** the name (NAM) of the first subscriber is transmitted by means of a message from a private branch exchange (NST) to a second exchange (VST2),
- **in that** the name (NAM) is transmitted in the telecommunication network (NET) by means of a Transaction Capability Application Part service TCAP from the second exchange (VST2) to a first exchange (VST1), and
- **in that** the name (NAM) of the first subscriber is transmitted as a character string from the first exchange (VST1) to the telecommunication terminal of the second subscriber (TLN2), and the name (NAM) is output visually.

2. Method according to Claim 1, **characterized in that** at least part of the telephone number (NUM) is used for determining which device in the telecommunication network (NET) is intended to ascertain the name.

3. Method according to Claim 1 or 2, **characterized in that** only part of the telephone number (NUM) is evaluated for ascertaining the name.

4. Method according to one of Claims 1 to 3, **characterized in that** use of the service requires the input of an access code which is evaluated in the telecommunication network (NET).

5. Method according to one of Claims 1 to 4, **characterized in that** the telephone number and the service use code are input using the "Subscriber Control Input" service SCI.

6. Method according to one of Claims 1 to 5, **characterized in that** the telephone number and the service use code are transmitted in the telecommunication network by means of the Remote Subscriber Controlled Input service RSCI.

7. Method according to one of Claims 1 to 6,
**characterized**
- **in that** the name (NAM) of the first subscriber is transmitted to the telecommunication terminal of the second subscriber (TLN2) in spoken form, and the name is output audibly.

8. Apparatus, comprising
- means for connecting voice channels and
- reception means for receiving a telephone number (NUM) associated with a first subscriber and a service use code (COD), wherein
- said apparatus comprises starting means for starting ascertainment of the name (NAM) of the first subscriber using the service use code (COD) and searching means for ascertaining the name (NAM) using this telephone number (NUM), and
- said apparatus comprises sending means for sending the name (NAM) to a telecommunication terminal of a second subscriber (TLN2),
**characterized**
**in that** the name (NAM) of the first subscriber is transmitted by means of a message from a private branch exchange (NST) to a second exchange (VST2),
**in that** the name (NAM) is transmitted in a telecommunication network (NET) by means of a Transaction Capability Application Part service TCAP from the second exchange (VST2) to a first exchange (VST1), and
**in that** the name (NAM) of the first subscriber is transmitted as a character string from the first exchange (VST1) to the telecommunication terminal of the second subscriber (TLN2), and the name (NAM) is output visually.

9. Apparatus according to Claim 8, **characterized in that** searching means for ascertaining the name (NAM) using only part of this telephone number (NUM) are present.

## Revendications

1. Procédé pour transmettre un nom (NAM) d'un premier abonné à un deuxième abonné (TLN2) dans un réseau de télécommunications (NET), un numéro d'appel (NUM) du premier abonné et un code d'utilisation de service (COD) du deuxième abonné (TLN2) étant saisis sur un terminal de télécommunication qui lui est associé,
- ce numéro d'appel (NUM) étant transmis au réseau de télécommunications (NET) et la détermination du nom (NAM) du premier abonné qui est associé à ce numéro d'appel (NUM) étant lancée sur la base du code d'utilisation de service (COD) et
- le nom (NAM) étant transmis au terminal de télécommunication du deuxième abonné (TLN2) et y étant produit en sortie sans qu'il y ait établissement d'une liaison vers le premier abonné,
**caractérisé en ce que** :
- le nom (NAM) du premier abonné est transmis d'un autocommutateur privé (NST) à un deuxième centre de commutation (VST2) à l'aide d'un message ;
- le nom (NAM) est transmis du deuxième centre de commutation (VST2) à un premier centre de commutation (VST1) dans le réseau de télécommunications (NET) à l'aide d'un service « Transaction Capability Application Part » TCAP ; et
- le nom (NAM) du premier abonné est transmis sous la forme d'une chaîne de caractères du premier centre de commutation (VST1) au terminal de télécommunication du deuxième abonné (TLN2) et la production du nom (NAM) en sortie est optique.

2. Procédé selon la revendication 1, **caractérisé en ce qu'**il est fait appel à au moins une partie du numéro d'appel (NUM) pour établir par quel dispositif la détermination du nom doit être effectuée dans le réseau de télécommunications (NET).

3. Procédé selon la revendication 1 ou 2, **caractérisé en ce que**, pour la détermination du nom, uniquement une partie du numéro d'appel (NUM) est évaluée.

4. Procédé selon l'une des revendications 1 à 3, **caractérisé en ce qu'**il faut introduire, pour l'utilisation du service, un code d'accès qui est évalué dans le réseau de télécommunications (NET).

5. Procédé selon l'une des revendications 1 à 4, **caractérisé en ce que** la saisie du numéro d'appel et du code d'utilisation de service se fait à l'aide du service « Subscriber Controlled Input » SCI.

6. Procédé selon l'une des revendications 1 à 5, **caractérisé en ce que** le numéro d'appel et le code d'utilisation de service sont transmis dans le réseau de télécommunications à l'aide du service « Remote Subscriber Controlled Input » RSCI.

7. Procédé selon l'une des revendications 1 à 6, **caractérisé en ce que** le nom (NAM) du premier abonné est transmis au terminal de télécommunication du deuxième abonné (TLN2) sous forme vocale et **en ce que** la production du nom en sortie est acoustique.

8. Dispositif comprenant :
- des moyens pour commuter des canaux vocaux et
- des moyens de réception pour recevoir un numéro d'appel (NUM) associé à un premier abonné et un code d'utilisation de service (COD),
- les moyens de lancement pour lancer une détermination du nom (NAM) du premier abonné à l'aide du code d'utilisation de service (COD) et des moyens de recherche pour déterminer le nom (NAM) à l'aide de ce numéro d'appel (NUM) et
- les moyens d'émission pour envoyer le nom (NAM) à un terminal de télécommunication d'un deuxième abonné (TLN2),
**caractérisé en ce que** :
- le nom (NAM) du premier abonné est transmis d'un autocommutateur privé (NST) à un deuxième centre de commutation (VST2) à l'aide d'un message ;
- le nom (NAM) est transmis du deuxième centre de commutation (VST2) à un premier centre de commutation (VST1) dans un réseau de télécommunications (NET) à l'aide d'un service « Transaction Capability Application Part » TCAP ; et
- le nom (NAM) du premier abonné est transmis sous la forme d'une chaîne de caractères du premier centre de commutation (VST1) au terminal de télécommunication du deuxième abonné (TLN2) et la production du nom (NAM) en sortie est optique.

9. Dispositif selon la revendication 8, **caractérisé par** la présence de moyens de recherche pour déterminer le nom (NAM) uniquement à l'aide d'une partie de ce numéro d'appel (NUM).
